# EUROPEAN PATENT SPECIFICATION

(11) **EP 2 012 084 B1**
(45) Date of publication and mention of the grant of the patent: **17.12.2014**
(21) Application number: 08011956.3
(22) Date of filing: 02.07.2008
(51) Int. Cl.: G01B 5/012, G01B 1/00

(54) **Method and apparatus for manufacturing a stylus**
Verfahren und Vorrichtung zur Herstellung eines Stylus
Procédé et appareil de fabrication d'un stylus

(30) Priority: 03.07.2007 JP 2007175389
(43) Date of publication of application: 07.01.2009
(73) Proprietor: Mitutoyo Corporation, Kawasaki-shi, Kanagawa 213-8533 (JP)
(72) Inventor: Yutaka, Tsuchida, Tsukuba-shi Ibaraki 305-0854 (JP)
(74) Representative: Grünecker, Kinkeldey, Stockmair & Schwanhäusser

(56) References cited:
- WO-A-2004/102582
- DE-U1-202005 003 217

## Description

### BACKGROUND OF THE INVENTION

### 1. FIELD OF THE INVENTION

The present invention relates to a method and apparatus for manufacturing a stem.

### 2. DESCRIPTION OF RELATED ART

Coordinate measuring machines, surface profile measuring instruments and small hole measuring instruments for measuring a shape or dimension of an object to be measured by contacting a probe mounted on an end of a movable shaft to the object to be measured have been conventionally known. The probe used for these measuring instruments includes a columnar stem and a contact portion formed on an end of the stem.

In recent years, various objects have been required to be measured, where, for example, there has been a growing need for measuring a fine object such as an inner wall surface of a hole having 20µm or less diameter, which urges development of an extra thin (for example, 5µm or less) stem that can measure such fine object.

Electric discharge machining apparatus for processing a material utilizing thermal energy during discharge (for example, see Document 1: JP-A-11-271345) or apparatus using a chemical process have been conventionally known as a stem manufacturing apparatus. Any conductive material can be processed by the electric discharge machining apparatus, which allows processing of an ultrahard material such as superalloy or tungsten to provide a rigid and durable stem. The apparatus using the chemical process can manufacture a plurality of stems at once so that production costs can be reduced.

However, a yield rate is extremely reduced and a considerable machining time is required for manufacturing a stem having 20µm or less diameter in the electric discharge machining apparatus. Additionally, since the electric discharge machining apparatus produces a satin-finished surface, a stem is not rigid enough to be used for measurement especially when manufacturing a stem having 5µm or less diameter. In the apparatus using the chemical process, materials are limited to silicon and only substantially flat stems can be manufactured. Therefore, a stem manufactured by this apparatus cannot be used to measure geometry such as an inner wall surface of a hole.

WO 2004/102582 describes nano-scale laser-based sculpting of carbon probe tips.

### SUMMARY OF THE INVENTION

An object of the present invention is to provide a method and apparatus that can manufacture an extra thin stem.

According to the invention, a stem manufacturing method according to claim 1 is provided.

The heater includes a nichrome heater and ceramic heater.

With this arrangement, an outer periphery of the carbon fiber is heated to be oxidized by the heater, thereby dispersing the outer periphery as carbon dioxide in the atmosphere. Accordingly, a diameter of the carbon fiber is reduced to a desired diameter (for example, 51zm or less diameter) in order to manufacture the extra thin stem.

In addition, unlike the electric discharge machining, the outer periphery of the carbon fiber is not satin-finished since the carbon fiber is thinned by heating and oxidizing the outer periphery. Therefore, a sufficiently rigid stem having, for example, 5µm or less diameter, can be manufactured. By using this stem, an unconventional extra thin probe can be provided.

Further, the outer periphery can be evenly oxidized since the carbon fiber and the heater are disposed substantially in parallel and one of them is rotated about a center line of the carbon fiber. Accordingly, a pillar-shaped stem can be manufactured. Therefore, an area of an end surface can be enlarged and a contact portion can be easily formed on the end surface when the probe is produced, as compared to a tapered (truncated conical) stem. Additionally, as compared to the electric discharge machining, a stem manufacturing time can be reduced since diameter reduction of the carbon fiber with thermal energy of the heater progresses within a short period of time.

According to the aspect of the present invention, it is preferable that the carbon fiber and the heater are moved to be close to each other while one of the carbon fiber and the heater is rotated.

With this arrangement, the outer periphery of the carbon fiber can be rapidly heated since the carbon fiber is adjacent to the heater. Accordingly, the stem manufacturing time is further reduced.

According to the invention, a stem manufacturing method according to claim 3 is provided.

With this arrangement, an extra thin and sufficiently rigid stem can be manufactured within a short period of time since the carbon fiber and the heater are located adjacent to each other and an outer periphery of the carbon fiber is heated to be oxidized, similar to the above-described method according to the aspect of the present invention. Further, the carbon fiber can be gradually oxidized from its distal end since the heater is disposed substantially orthogonal to a center line of the carbon fiber. Accordingly, a tapered (truncated conical) stem having a thick proximal portion to steadily hold the proximal portion can be manufactured.

It is preferable that the carbon fiber and the heater are moved to be close to each other while one of the carbon fiber and the heater is rotated about the center line of the carbon fiber.

With this arrangement, the outer periphery of the carbon fiber can be evenly oxidized since one of the carbon fiber and the heater is rotated about the center line of the carbon fiber. Accordingly, rigidity of the stem is further improved.

Preferably, an inert gas is blown to the carbon fiber when the carbon fiber is thinned to a desired diameter.

The inert gas may be carbon dioxide, nitrogen or argon.

With this arrangement, the inert gas is blown to the carbon fiber when the diameter of the carbon fiber is reduced to a desired diameter through oxidization of the carbon fiber with thermal energy of the heater, which allows easy prevention of the oxidization of the carbon fiber. Therefore, a stem of the desired diameter can be easily manufactured.

According to the invention, a stem manufacturing apparatus according to claim 6 is provided.

With this arrangement, similarly to the method according to the above aspect of the present invention, an extra thin and sufficiently rigid stem can be manufactured within a short period of time since an outer periphery of the carbon fiber is heated to be oxidized. Additionally, a pillar-shaped stem can be manufactured and am contact portion can be easily formed on an end surface of the stem since one of the carbon fiber and the heater is rotated about the center line by the rotator in a manner similar to the methods according to above aspects of the present invention.

According to the invention, a stem manufacturing apparatus according to claim 7 is provided.

With this arrangement, an extra thin and sufficiently rigid stem can be manufactured within a short period of time similarly to the methods according to above aspects of the present invention. Further, a tapered stem having a thick proximal portion to steadily hold the proximal portion can be manufactured.

Preferably, the stem manufacturing apparatus according to the aspect of the present invention preferably includes a blowing nozzle for blowing an inert gas to the carbon fiber.

With this arrangement, similar advantages are offered due to the similarity to the methods according to above aspects of the present invention.

### BRIEF DESCRIPTION OF THE DRAWINGS

Figs. 1A through 1C illustrate a stem manufacturing method using a stem manufacturing apparatus according to a first exemplary embodiment of the present invention.
Figs. 2A and 2B illustrate a stem manufacturing method using a stem manufacturing apparatus according to a second exemplary embodiment of the present invention.

### DETAILED DESCRIPTION OF PREFERRED EMBODIMENT(S)

An exemplary embodiment of the present invention will be described below with reference to the attached drawings.

### [First exemplary embodiment]

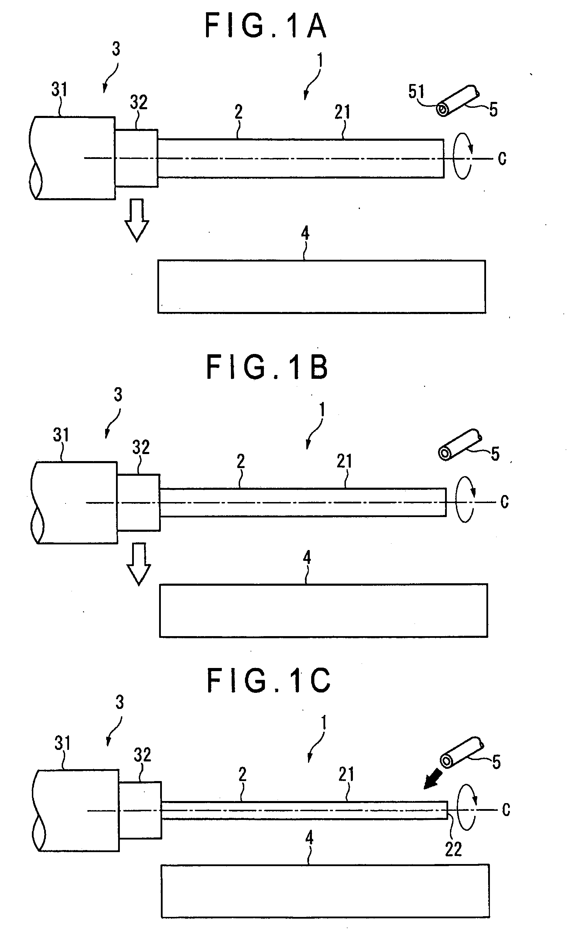

Figs. 1A through 1C illustrate a stem manufacturing method using a stem manufacturing apparatus 1 according to a first exemplary embodiment of the present invention.

As shown in Fig. 1A, the stem manufacturing apparatus 1 includes a rotator 3 for holding a pillar-shaped carbon fiber 2 and rotating the carbon fiber 2 about a center line C along an extending direction of the carbon fiber 2, a heater 4 disposed in parallel to the carbon fiber 2, and a blowing nozzle 5 for blowing an inert gas to the carbon fiber 2.

A carbon fiber having 7-8µm diameter which is commercially available is used as the carbon fiber 2.

The rotator 3 has a spindle 31 and a collect chuck 32 attached to the spindle 31 to hold the carbon fiber 2. The spindle 31 is rotatable (for example, 50rpm or higher) and movable close to the heater 4. At first, the spindle 31 is disposed such that the carbon fiber 2 is spaced apart from the heater 4 by a distance about 2-3 times greater than a diameter of the carbon fiber 2. The collect chuck 32 holds the carbon fiber 2 straight along the center line C of the spindle 31 (i.e. the center line C of the carbon fiber 2). In other words, the rotator 3 is capable of rotating the carbon fiber 2 about the center line C of the carbon fiber 2 and moving the carbon fiber 2 close to the heater 4 while keeping the carbon fiber 2 in parallel to the heater 4.

The heater 4 is a ceramic heater and its temperature is hoisted to 700 degrees C.

The blowing nozzle 5 is disposed with an aperture 51 facing to the carbon fiber 2. The blowing nozzle 5 is connected to a gas supplier (not shown) having a compressor. The gas supplier supplies the inert gas such as carbon dioxide, nitrogen and argon to the blowing nozzle 5.

The manufacturing process by the stem manufacturing apparatus 1 will be described below. It should be noted that an operator for operating the stem manufacturing apparatus 1 performs the following operations while watching an optical microscope.

First, the operator attaches the carbon fiber 2 to the rotator 3 and locates the spindle 31 at a position spaced apart from the heater 4 by the distance about 2-3 times greater than the diameter of the carbon fiber 2. Then, the operator operates the rotator 3 to move the carbon fiber 2 close to the heater 4 while rotating the carbon fiber 2.

Consequently, an outer periphery 21 of the carbon fiber 2 is gradually heated as it approaches the heater 4, so that oxidization of the carbon fiber 2 progresses and the outer periphery 21 is dispersed as carbon dioxide in the atmosphere. Therefore, as shown in Fig. 1B, the diameter of the carbon fiber 2 is gradually reduced as the carbon fiber 2 approaches the heater 4. In the embodiment, the outer periphery 21 can be evenly oxidized around the center line C of the heater 4 and the carbon fiber 2 can be thinned while keeping its pillar-shape since the carbon fiber 2 is disposed in parallel to the heater 4 and rotated about the center line C of the heater 4.

As shown in Fig. 1C, when the carbon fiber 2 is thinned to a desired diameter (e.g. 5µm), the inert gas is blown to the carbon fiber 2 by the blowing nozzle 5 through the operation by the operator. Therefore, the oxidization of the carbon fiber 2 is instantaneously prevented and an extra thin stem (the carbon fiber 2) of the desired diameter can be manufactured. Further, a probe may be provided by forming a contact portion on, for example, an end surface 22 of the stem (see Fig. 1C).

The stem manufacturing apparatus 1 according to the above-described embodiment offers several advantages as follows.
(1) An extra thin stem having, for example, 5µm or less diameter can be manufactured since the diameter of the carbon fiber 2 is reduced by heating and oxidizing the outer periphery 21 of the carbon fiber 2 by the heater 4. By using this stem, an unconventional extra thin probe can be provided.

Further, the outer periphery 21 of the carbon fiber 2 is not satin-finished since the carbon fiber 2 is thinned by heating and oxidizing the outer periphery 21 by the heater 4. Therefore, a sufficiently rigid stem of 5µm or less diameter can be manufactured.

Additionally, a stem manufacturing time can be reduced, as compared to electrical discharge machining, since diameter reduction of the carbon fiber 2 with thermal energy of the heater 4 progresses within a short period of time.
(2) Oxidization of the carbon fiber 2 is instantaneously and easily stopped since the blowing nozzle 5 blows the inert gas to the carbon fiber 2 when the diameter of the carbon fiber is reduced to a desired diameter. Therefore, the stem of the desired diameter can be easily manufactured.
(3) Production costs can be reduced since the carbon fiber 2 of 7-8µm diameter is commercially available.
(4) The stem manufacturing time can be further reduced since the outer periphery 21 of the carbon fiber 2 can be rapidly heated by moving the carbon fiber 2 close to the heater 4.
(5) The outer periphery 21 can be evenly oxidized since the carbon fiber 2 is rotated about the center line C of the carbon fiber 2 while keeping the carbon fiber 2 in parallel to the heater 4. Accordingly, a pillar-shaped stem can be manufactured. Therefore, an area of an end surface 22 can be enlarged as compared to a truncated conical stem and the contact portion can be easily formed on the end surface 22 when the probe is produced.

Further, a straight stem can be manufactured since the outer periphery 21 of the carbon fiber 2 can be evenly oxidized.

### [Second exemplary embodiment]

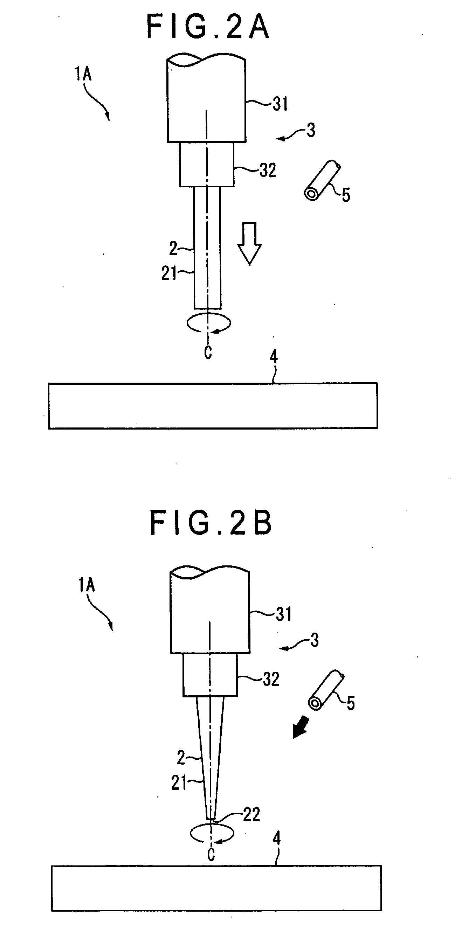

Figs. 2A and 2B illustrate a stem manufacturing method using a stem manufacturing apparatus 1 according to a second exemplary embodiment of the present invention. It should be noted that components which are identical or correspond to those of the first exemplary embodiment will be denoted by the same reference numerals, description of which will be omitted or simplified.

Although the arrangement of the second exemplary embodiment is substantially the same as that of the first exemplary embodiment, the carbon fiber 2 is held in a manner different from that in the first exemplary embodiment.

According to the second exemplary embodiment, the rotator 3 holds the carbon fiber 2 such that the center line C of the carbon fiber 2 is orthogonal to the heater 4 as shown in Fig. 2A. In the second exemplary embodiment, the rotator 3 also rotates the carbon fiber 2 about the center line C of the carbon fiber 2 and moves the carbon fiber 2 close to the heater 4 so that the carbon fiber 2 is oxidized and thinned. As shown in Fig. 2B, the extra thin stem of the desired diameter can be manufactured since the blowing nozzle 5 blows the inert gas to the carbon fiber 2 when the diameter of the carbon fiber 2 is reduced to the desired diameter. Thus, the second exemplary embodiment offers the advantages (1) through (4) similarly to the first exemplary embodiment as well as the following additional advantages.
(6) The carbon fiber 2 can be gradually oxidized from its distal end since the rotator 3 holds the carbon fiber 2 such that the center line C of the carbon fiber 2 is orthogonal to the heater 4. Therefore, the tapered (truncated conical) stem having the thick proximal portion to steadily hold the proximal portion can be manufactured.

It should be understood that the present invention is not limited to the above-described exemplary embodiments but may include any modification or improvement made within the scope of the present invention as defined by the appended claims.

Specifically, although the heater 4 is the ceramic heater in the first and second exemplary embodiments, any heater may be used as long as it can heat the carbon fiber 2.

Further, although the rotator 3 rotates the carbon fiber 2 relative to the heater 4 in the first and second exemplary embodiments, the heater 4 may be alternatively rotated relative to the carbon fiber 2.

## Claims

1. A stem manufacturing method for manufacturing a stem of a probe used for a measuring instrument by processing a pillar-shaped carbon fiber (2), the method comprising;
locating the carbon fiber (2) and a heater (4) substantially in parallel, and
reducing a diameter of the carbon fiber (2) to a desired diameter while rotating one of the carbon fiber (2) and the heater (4) about a center line (C) of the carbon fiber (2).

2. The stem manufacturing method according to claim 1, wherein
the carbon fiber (2) and the heater (4) are moved to be close to each other while one of the carbon fiber (2) and the heater (4) is rotated.

3. A stem manufacturing method for manufacturing a stem of a probe used for a measuring instrument by processing a pillar-shaped carbon fiber (2), the method comprising;
locating a heater (4) at a position spaced slightly apart from an end of the carbon fiber (2) in a manner substantially orthogonal to a center line (C) of the carbon fiber (2), and
reducing a diameter of the carbon fiber (2) in a tapered manner while moving the carbon fiber (2) and the heater (4) to be close to each other and rotating one of the carbon fiber (2) and the heater (4) about a center line (C) of the carbon fiber (2).

4. The stem manufacturing method according to claim 3, wherein
the carbon fiber (2) and the heater (4) are moved to be close to each other while one of the carbon fiber (2) and the heater (4) is rotated about a center line (C) of the carbon fiber (2).

5. The stem manufacturing method according to any one of claims 1 to 4, wherein
an inert gas is blown to the carbon fiber (2) when the carbon fiber (2) is thinned to a desired diameter.

6. A stem manufacturing apparatus for manufacturing a stem of a probe used for a measuring instrument by processing a pillar-shaped carbon fiber (2), the apparatus comprising;
a heater (4) disposed substantially in parallel to the carbon fiber (2), and
a rotator (3) for rotating one of the carbon fiber (2) and the heater (4) about a center line (C) of the carbon fiber (2).

7. A stem manufacturing apparatus for manufacturing a stem of a probe used for a measuring instrument by processing a pillar-shaped carbon fiber (2), the apparatus comprising;
a heater (4) located at a position spaced slightly apart from an end of the carbon fiber (2) in a manner substantially orthogonal to a center line (C) of the carbon fiber (2), and
a rotator (3) for rotating one of the carbon fiber (2) and the heater (4) about a center line (C) of the carbon fiber (2).

8. The stem manufacturing apparatus (1) according to claim 6 or claim 7, further comprising:
a blowing nozzle (5) for blowing an inert gas to the carbon fiber (2).

## Patentansprüche

1. Schaftherstellungsverfahren zum Herstellen eines Schafts einer Sonde, die für ein Messinstrument verwendet wird, durch Bearbeiten einer säulenförmigen Kohlefaser (2), wobei das Verfahren umfasst:
Anordnen der Kohlefaser (2) und eines Heizers (4) im Wesentlichen parallel, und
Reduzieren eines Durchmessers der Kohlefaser (2) auf einen gewünschten Durchmesser, während entweder die Kohlefaser (2) oder der Heizer (4) um eine Mittellinie (C) der Kohlefaser (2) gedreht wird.

2. Schaftherstellungsverfahren nach Anspruch 1, wobei die Kohlefaser (2) und der Heizer (4) so bewegt werden, dass sie nahe beieinander sind, während die Kohlefaser (2) oder der Heizer (4) rotiert wird.

3. Schaftherstellungsverfahren zum Herstellen eines Schafts einer Sonde, die für ein Messinstrument verwendet wird, durch Bearbeiten einer säulenförmigen Kohlefaser (2), wobei das Verfahren umfasst:
Anordnen eines Heizers (4) an einer Position, die leicht von einem Ende der Kohlefaser (2) auf eine Art beabstandet ist, so dass sie im Wesentlichen orthogonal zu einer Mittellinie (C) der Kohlefaser (2) ist, und
Reduzieren eines Durchmessers der Kohlenfaser (2) auf konisch zulaufende Weise, während die Kohlefaser (2) und der Heizer (4) so bewegt werden, dass sie nahe beieinander sind, und Rotieren der Kohlefaser (2) oder des Heizers (4) um eine Mittellinie (C) der Kohlefaser (2).

4. Schaftherstellungsverfahren nach Anspruch 3, wobei die Kohlefaser (2) und der Heizer (4) so bewegt werden, dass sie nahe beieinander sind, während die Kohlefaser (2) oder der Heizer (4) um eine Mittellinie (C) der Kohlefaser (2) rotiert wird.

5. Schaftherstellungsverfahren nach einem der Ansprüche 1 bis 4, wobei ein Inertgas zu der Kohlefaser (2) geblasen wird, wenn die Kohlefaser (2) zu einem gewünschten Durchmesser verdünnt wird.

6. Schaftherstellungsvorrichtung zum Herstellen eines Schafts einer Sonde, die für ein Messinstrument verwendet wird, durch Bearbeiten einer säulenförmigen Kohlefaser (2), wobei die Vorrichtung umfasst:
einen Heizer (4), der im Wesentlichen parallel zur Kohlefaser (2) angeordnet ist, und
einen Rotator (3) zum Rotieren der Kohlefaser (2) oder des Heizers (4) um eine Mittellinie (C) der Kohlefaser (2).

7. Schaftherstellungsvorrichtung zum Herstellen eines Schafts einer Sonde, die für ein Messinstrument verwendet wird, durch Bearbeiten einer säulenförmigen Kohlefaser (2), wobei die Vorrichtung umfasst:
einen Heizer (4), der an einer Position angeordnet ist, die leicht von einem Ende der Kohlefaser (2) in einer Weise beabstandet ist, so dass sie im Wesentlichen orthogonal zu einer Mittellinie (C) der Kohlefaser (2) ist, und
einen Rotator (3) zum Rotieren der Kohlefaser (2) oder des Heizers (4) um eine Mittellinie (C) der Kohlefaser (2).

8. Schaftherstellungsvorrichtung (1) nach Anspruch 6 oder Anspruch 7, die weiterhin umfasst:
eine Ausblasdüse (5), um ein Inertgas zu der Kohlefaser (2) zu blasen.

## Revendications

1. Procédé de fabrication d'une tige pour fabriquer une tige d'une sonde utilisée pour un instrument de mesure par un traitement d'une fibre de carbone conformée en un pilier (2), le procédé consistant à :
- positionner la fibre de carbone (2) et un dispositif de chauffage (4) sensiblement en parallèle ; et
- réduire un diamètre de la fibre de carbone (2) à un diamètre voulu tout en entrainant en rotation un élément parmi la fibre de carbone (2) et le dispositif de chauffage (4) autour d'une ligne centrale (C) de la fibre de carbone (2).

2. Procédé de fabrication d'une tige selon la revendication 1, pour lequel :
- la fibre de carbone (2) et le dispositif de chauffage (4) sont déplacés pour être proches l'un de l'autre tandis qu'un élément parmi la fibre de carbone (2) et le dispositif de chauffage (4) est entrainé en rotation.

3. Procédé de fabrication d'une tige pour fabriquer une tige d'une sonde utilisée pour un instrument de mesure par un traitement d'une fibre de carbone conformée en un pilier (2), le procédé consistant à :
- positionner un dispositif de chauffage (4) à une position légèrement espacée d'une extrémité de la fibre de carbone (2) d'une façon sensiblement orthogonale à une ligne centrale (C) de la fibre de carbone (2) ; et
- réduire un diamètre de la fibre de carbone (2) d'une façon effilée tout en déplaçant la fibre de carbone (2) et le dispositif de chauffage (4) pour qu'ils soient proches l'un de l'autre et en entrainant en rotation un élément parmi la fibre de carbone (2) et le dispositif de chauffage (4) autour d'une ligne centrale (C) de la fibre de carbone (2) .

4. Procédé de fabrication d'une tige selon la revendication 3, pour lequel :
- la fibre de carbone (2) et le dispositif de chauffage (4) sont déplacés pour être proches l'un de l'autre tandis qu'un élément parmi la fibre de carbone (2) et le dispositif de chauffage (4) est entrainé en rotation autour d'une ligne centrale (C) de la fibre de carbone (2) .

5. Procédé de fabrication d'une tige selon l'une quelconque des revendications 1 à 4, pour lequel :
- un gaz inerte est soufflé vers la fibre de carbone (2) lorsque la fibre de carbone (2) est amincie à un diamètre voulu.

6. Appareil de fabrication d'une tige pour fabriquer une tige d'une sonde utilisée pour un instrument de mesure par un traitement d'une fibre de carbone conformée en un pilier (2), l'appareil comprenant :
- un dispositif de chauffage (4) disposé sensiblement en parallèle à la fibre de carbone (2) ; et
- un dispositif de rotation (3) pour entrainer en rotation un élément parmi la fibre de carbone (2) et le dispositif de chauffage (4) autour d'une ligne centrale (C) de la fibre de carbone (2).

7. Appareil de fabrication d'une tige pour fabriquer une tige d'une sonde utilisée pour un instrument de mesure par un traitement d'une fibre de carbone conformée en un pilier (2), l'appareil comprenant :
- un dispositif de chauffage (4) positionné à une position légèrement espacée d'une extrémité de la fibre de carbone (2) d'une façon sensiblement orthogonale à une ligne centrale (C) de la fibre de carbone (2) ; et
- un dispositif de rotation (3) pour entrainer en rotation un élément parmi la fibre de carbone (2) et le dispositif de chauffage (4) autour d'une ligne centrale (C) de la fibre de carbone (2).

8. Appareil de fabrication d'une tige (3) selon la revendication 6 ou la revendication 7, comprenant en outre :
- une buse de soufflage (5) pour souffler un gaz inerte vers la fibre de carbone (2).
